Europäisches Patentamt

European Patent Office

Office européen des brevets

(19)

(11) Publication number : 0 533 424 A1

## (12) EUROPEAN PATENT APPLICATION

(21) Application number : 92308362.0

(22) Date of filing : 14.09.92

(51) Int. Cl.5 : G06F 3/023, G06F 3/033

(30) Priority : 16.09.91 US 760679

(43) Date of publication of application :
24.03.93 Bulletin 93/12

(84) Designated Contracting States :
DE FR GB IT

(71) Applicant : International Business Machines
Corporation
Old Orchard Road
Armonk, N.Y. 10504 (US)

(72) Inventor : Becker, Craig Henry
9215 Great Hills Trail No.309
Austin, Texas 78759 (US)
Inventor : Pickover, Clifford Alan
37 Yorkshire Lane
Yorktown Heights, New York 10598 (US)
Inventor : Winarski, Daniel James
647 South Woodstock Drive
Tucson, Arizona 85710 (US)

(74) Representative : Blakemore, Frederick
Norman
IBM United Kingdom Limited Intellectual
Property Department Hursley Park
Winchester Hampshire SO21 2JN (GB)

(54) Multiple action icon.

(57)    The invention is a single icon which can be used in front-of-screen applications for selecting a plurality of actions to be performed. The actions are selected by positioning the cursor within the icon. In the preferred embodiment the icon is a dartboard in which the radial position of the cursor represents a first action to be performed and the angular position of the cursor represents a second action to be performed. The invention also includes a method for performing the actions.

FIG. 4

EP 0 533 424 A1

Field of the Invention

This invention relates to an icon which can be used in front-of-screen applications to select a plurality of actions to be performed. More particularly, the position of a cursor in the icon is used to represent the actions selected.

Background Art

Information processing systems typically include a display, such as cathode ray tube (CRT) or similar device, for prompting a user to input certain information. In such "front-of-screen" applications any of several user interfaces may be used. A keyboard, mouse, joystick, trackball, or the like is often utilised to position a cursor on the display to enter the information. The position of the cursor on the display represents an action to be taken by the system. A user positions the cursor to select the desired action. Upon entering the position of the cursor, the system performs the desired action.

To make front-of-screen applications practical, the user is typically prompted as to where to position the cursor to select any particular action. In some applications alphanumeric descriptions of the actions to be selected, or summaries thereof, are-utilised to prompt the user. The user selects a single desired action by positioning the cursor in the vicinity of the alphanumerics associated therewith. Unfortunately, it is often difficult to represent an action to the user with a limited amount of alphanumerics.

To make front-of-screen applications user friendly, alphanumerics may be replaced by icons. It is well known that the user interface of computers manufactured by Apple Computer, Incorporated includes numerous icons. As used herein, an icon is a non-alphanumeric image. The image is simply a graphical representation of the action to be performed. An image utilised to represent a particular action is usually chosen because of its natural association with such action. For example, an image of a trash can may represent the delete function.

Unfortunately, as the number of options to be made available to the user increase, it becomes more difficult to represent all of such options as icons on a single display screen. There are two known solutions to such a problem. The first solution is to reduce the size of each individual icon representing an action, thereby permitting an increased number of such icons to fit on a display. The second solution is to split the icons into a series of screens to be displayed. The user selects from N icons shown on a first screen of the display. The Nth icon in the first screen represents a second screen of icons. If the user does not desire to have the action represented by any of the first N-1 icons in the first screen, the Nth icon is selected. The system then displays the second screen of icons from which the user may select. The second screen includes an icon to return to the first screen of icons should the user need to do so.

Both of the aforementioned solutions accept the number of icons required in the user interface. Both solutions tend to reduce user friendliness of the user interface by allowing the number of icons to increase, and by either cluttering the display screen or by requiring additional display screens. In addition, where multiple actions are to be selected, the user must separately enter the selection of an icon for each action to be performed. The heretofore unrecognised problem is how to actually reduce the number of icons required.

BRIEF DESCRIPTION OF THE DRAWINGS

The invention will now be described, by way of example only, with reference to the accompanying drawings, in which:

Fig. 1 is a schematic block diagram of an image processing system employing the present invention;
Fig. 2 is an example of a dartboard icon for the invention;
Fig. 3 is an example of a checkerboard icon for the invention;
Fig. 4 is an example of a display screen including the icons of Figs. 2-3;
Fig. 5 is a flow chart of the method for allowing a user to select actions to be performed in the system of Fig. 1;
Fig. 6 is a flow chart logically connecting to that in Fig. 5;
Fig. 7 is a flow chart logically connecting to that in Fig. 5.

Detailed Description of the Invention

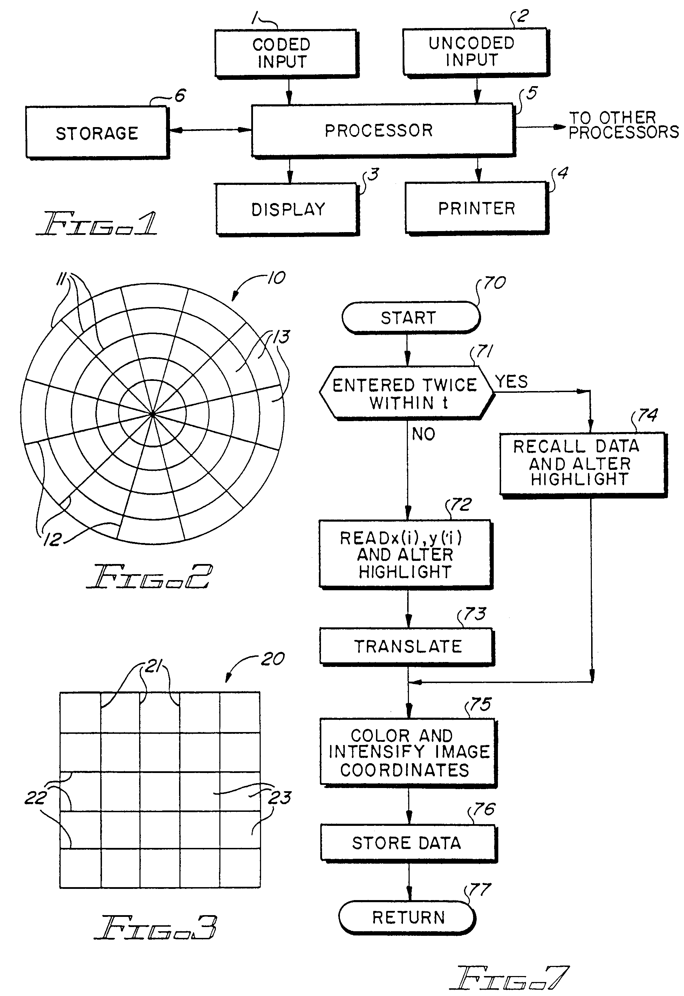

Referring now more particularly to the drawings, like numerals denote like features and structural elements in the various figures. The invention will be described as embodied in an image processing system. Referring to Fig. 1, an image processing system in which the invention is embodied will now be described. The system includes input devices, output devices, processors, and storage. In the preferred embodiment, the image processing system is an IBM IMAGEPLUS image processing system. The details of an image processing system beyond the description provided herein are not relevant to the invention, and are known in the art.

The input devices include one or more coded input means 1 and one or more uncoded input means 2. Coded input means include keyboards, mouses, joysticks, trackballs and other components for the input of coded data to the system. The coded data may include image data or other data. Uncoded input means 2 include optical scanners, medical imaging devices and other components for the input of uncoded image data.

The output devices include one or more displays 3 and one or more printers 4. Displays 3, which may be cathode ray tubes or other front-of-screen devices, include a screen used to provide visual information to a user. Such visual information includes the image itself, or directions for manipulating the image. Printers 4 are used to create permanent images on paper or other media.

One or more processors 5 manipulate the data input to the system and cause data to be output from the system, as previously described. Processors 5 are coupled to the input devices and output devices of the system, and can also be coupled to each other for communication therebetween. For example, processors 5 could be a network of mainframe or personal computers. Processors 5 are also coupled to some storage 6. Storage 6 is used to retain data, including image data, the instructions used by processors 5 to create and manipulate image 5, and the instructions used by processors 5 to interface with the other components of the system.

Storage 6 includes the main memory associated with each processor 5, and peripheral storage devices. The peripheral storage devices may be magnetic disk drives, optical disk drives and/or tape drives. The peripheral storage devices may be embodied in one or more automated storage libraries. Automated storage libraries include a plurality of storage cells or slots for retaining removable data storage media, such as magnetic tapes, magnetic disks or optical disks, a robotic picker mechanism, and one or more peripheral storage devices. Each data storage medium may be contained in a cassette or cartridge housing for easier handling by the picker. The picker operates on command to transfer the data storage media between the storage cells and the peripheral storage devices without manual assistance.

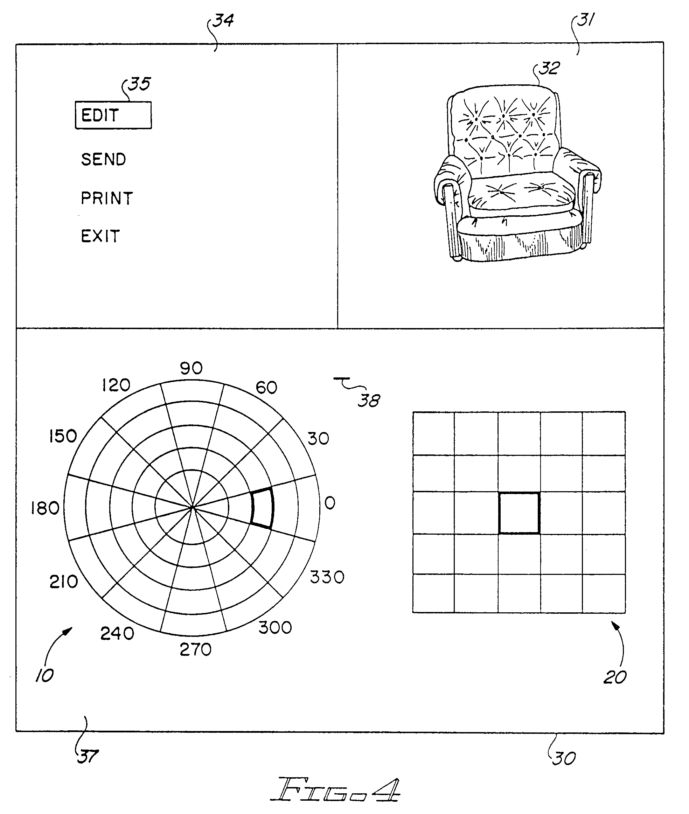

Referring to Fig. 2, the preferred icon for selecting a plurality of actions to be performed will now be described. The icon is a traditional dartboard 10. A set of concentric circles 11 is used to divide the icon into rings having distinct radial positions. A set of radii 12 is used to divide the icon into wedges having distinct angular positions. Any practical number of circles 11 and radii 12 may be utilised. As shown in the drawing, circles 11 and radii 12 divide dartboard 10 into 60 distinct regions 13. The radius of a region 13 represents a first action to be performed and the angular position of a region 13 represents a second action to be performed.

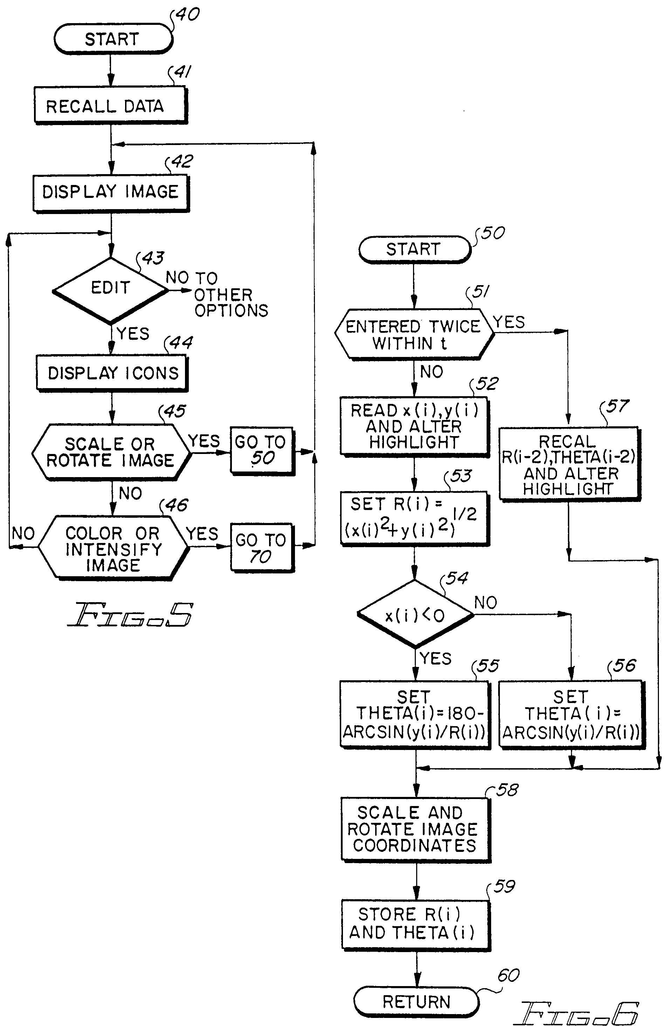

Referring to Fig. 3, an alternative icon for selecting a plurality of actions to be performed will now be described. The icon is a traditional checkerboard 20. A set of vertical lines 21 is used to divided the icon into stripes having distinct horizontal positions. A set of horizontal lines 22 is used to divide the icon into stripes having distinct vertical positions. Any practical number of vertical lines 21 and horizontal lines 22 may be utilised. As shown in the drawing, vertical lines 21 and horizontal lines 22 divide checkerboard 20 into 25 distinct regions 23. The horizontal position of a region 23 represents a first action to be performed and the vertical position of a region 13 represents a second action to be performed.

Referring to Fig. 4, a display screen 30 utilising the icons of Figs. 2-3 will now be described. Screen 30 is divided into three areas The first area is the image area 31. Image area 31 simply displays an image 32. In the drawing, image 32 is a chair design. The second area is the alphanumeric area 34. Alphanumeric area 34 displays options for the user. The user may select an option by entering the option name at a command line (not shown) with a keyboard, by touch screen input, by positioning a cursor over the option and entering the option with a mouse or joystick, etc. In the drawing, the EDIT option 35 has been selected, as indicated by its highlighted display.

The third area is the icon area 37. Icon area 37 displays icons allowing users to select actions to be performed. As shown, dartboard 10 and checkerboard 20 are simultaneously displayed. The user positions a display cursor 38 within a region of an icon to select the actions to be performed. As shown, cursor 38 is positioned outside the boundaries of dartboard 10 and checkerboard 20, but can be repositioned using a keyboard, mouse, joystick, trackball or similar input device. Upon entering the position of the cursor, the position of the cursor is translated into two actions by a processor. The processor then performs such actions.

In the preferred embodiment, dartboard icon 10 is used for scaling and rotating image 32. The radial position within dartboard 10 represents the scale of image 32. The inner ring is associated with a large decrease of the scale of image 32 (i.e. a reduction in size), the next most inner ring is associated with a small decrease of the scale, the middle ring is associated with no change in the scale, the next to the outer ring is associated with a small increase in the scale (i.e. an enlargement), and the outer ring is associated with a large increase in scale. The angular position within dartboard 10 similarly represents the rotation of image 32. The radial and angular positions are so used because of their easy, natural association with scale and rotation. For example, it is easy for a user to associate the angular position of the cursor within dartboard 10 to the desired amount of rotation of image 32. Dartboard 10 may also be used to select only one of the two possible actions. For selecting a single action, the user positions the cursor neutrally with respect to the remaining possible action. For example, to rotate image 32 without changing its scale, the user positions the cursor in the middle ring.

Also in the preferred embodiment, checkerboard icon 20 is used for colouring and intensifying image 32. The horizontal position within checkerboard 20 represents the colour of image 32. The left most vertical stripe is associated with a first colour for image 32, the next left most vertical stripe is associated with a second colour, the middle vertical stripe is associated with a third colour, the next to right most vertical stripe is associated with a fourth colour, and the right most vertical stripe is associated with a fifth colour. The vertical position within checkerboard 20 similarly represents the intensity of image 32.

The user can be assisted in manipulating image 32 in several ways. Each icon can be labelled to indicate the actions it represents. This can be accomplished using alphanumerics, if space permits, such as those shown in the drawing surrounding dartboard 10 to identify the desired rotation of image 32. The icons can also be labelled with colour and intensity. For example, each vertical stripe of checkerboard 20 can be displayed with its associated colour and each horizontal stripe of checkerboard 20 can be displayed with its associated intensity, thereby creating a grid of 25 unique squares. Also, a region of an icon can be highlighted to indicate the previous or current state of the image 32. For example, regions in dartboard 10 and checkerboard 20 are highlighted in the drawing by thickening their borders. Another human factors consideration would be to highlight the unit circle (scale coordinate of unity) of the dartboard icon 10.

As shown in the drawing, the selection of the EDIT option resulted in the display of icons 10 and 20. The selection of other options by the user would have prompted the display of other icons in icon area 37. For example, the selection of the SEND option could have resulted in the display of icons used to address the image being sent. These icons could include the dartboard 10 and checkerboard 20 for use in selecting multiple actions to be performed, or could include other icons for selecting single or multiple actions. In alternative embodiments, screen 30 could be varied. A different number of options and icons could be displayed at any given time. The portions of screen 30 devoted to each area could be rearranged. Screen 30 could be divided into two different screens. For example, the first screen could list the options. The option selected by the user would then result in the display of a second screen including the image and the icons. These variations are not relevant to the invention and are therefore not discussed further herein.

METHOD OF OPERATION

Referring to Figs. 5-7, the method for using dartboard icon 10 will now be described. The method begins at step 40. The system is initialised at step 41 with the recall of the necessary data from storage. At step 42 image area 31 and alphanumeric area 34 are displayed as in Fig. 4. At step 43, the method branches according to the option selected by the user. If the user selects an option other than EDIT, the method branches to such other option. If the user selects the EDIT option, the method continues at step 44 with the display of the dartboard icon 10 and the checkerboard icon 20 in icon area 37. The icons are highlighted as shown in Fig. 4 to indicate the current (i-1) icon region for image 32. At step 45, the method branches according to the selection of dartboard 10 by the user.

If the user selects dartboard icon 10, the method branches to step 50. At step 51, the method again branches. If the user made two entries upon dartboard 10 within a certain time t, it is considered to be an indication that the user wants to recall the previous scale and rotation of image 32. The previously selected (i-2) scale coordinate R and rotation coordinate THETA for image 32 are then recalled and the highlighting is adjusted to reflect such (i-2) icon region at step 57. If the user made only a single entry upon dartboard 10 within time t, the method proceeds from step 51 to step 52. At step 52 the entered cursor coordinates x(i) and y(i) are read and the highlighting adjusted to reflect such (i) icon region. The cursor coordinates are rectangular coordinates with the (0,0) point at the centre of dartboard 10. The cursor coordinates are then translated into a new scale coordinate R(i) at step 53 using the equation shown in the drawing. The method branches at step 54 depending upon the entered position of the cursor. If x(i) is less than 0, the cursor coordinates are translated into a new rotation coordinate THETA(i) at step 55 using the equation shown in the drawing. If x(i) is greater than 0, the cursor coordinates are translated into a new rotation coordinate THETA(i) at step 56 using the equation shown in the drawing. At step 58, the image data (X,Y) for image 32 is scaled and rotated. This is accomplished using the following equation:

$$\begin{vmatrix} X(i) \\ \\ Y(i) \end{vmatrix} = R(i) * \begin{vmatrix} \cos(THETA(i)) & \sin(THETA(i)) \\ \\ -\sin(THETA(i)) & \cos(THETA(i)) \end{vmatrix} * \begin{vmatrix} X(i-1) \\ \\ Y(i-1) \end{vmatrix}$$

where X(i) and Y(i) are the new coordinates of the image pixels and "*" represents the multiplication operation. R(i) and THETA(i) are stored at step 59, and the method returns at step 60 to display the new image at step 42.

If at step 45 the user does not select dartboard icon 10, the method continues at step 46. Step 46 branches according to the selection of checkerboard 20 by the user. If the user selects checkerboard 20, the method branches to step 70. The flow of steps 71-77 is similar to that of steps 51-60. Steps 71, 72 and 74 are analogous to steps 51, 52 and 57. Step 73 is analogous to steps 53-56, although simplified for convenience. Steps 75-77 are analogous to steps 58-60. The mathematics used in steps 71-77 are not shown, but are known in the art. If at step 46 the user does not select checkerboard 20, the method loops back to step 43. The user entered a cursor position outside of icons 10 and 20 and is therefore considered to have made an error or to be desirous of returning to select a different option. The SEND, PRINT and other options from alphanumeric area 34 also return to step 43 with the exception of the EXIT option, which exits the routine altogether.

While the invention has been described with respect to a preferred embodiment thereof, it will be understood by those skilled in the art that various changes in detail may be made therein without departing from the spirit, scope, and teaching of the invention. For example, in alternative embodiments, icons other than those shown in the drawing could be used to select the same actions to be performed. Also, the icons could be used to select any actions to be performed, not just those described herein. In addition, the icons could be used in any front-of-screen application.

Finally, the multiple action icons could be used to manipulate three dimensional graphics. The user could be permitted to toggle each icon between X-Y, Y-Z, and X-Z planes. For example, three dartboard icons could be displayed, one on each of three visible faces of a cube. The cube could be rotated by toggling to bring the desired face of the cube into the foreground as the active dartboard. Such an arrangement would be particularly useful for manipulating images relating to materials science (such as molecules and crystals), terrestrial geology, computer graphics, robotic arm control, and movie special effects. The equation required for such arrangement is:

$$\begin{vmatrix} X(i) \\ Y(i) \\ Z(i) \end{vmatrix} = R(i) * \begin{vmatrix} \cos(THxy(i)) & \sin(THxy(i)) & 0 \\ -\sin(THxy(i)) & \cos(THxy(i)) & 0 \\ 0 & 0 & 1 \end{vmatrix}$$

$$* \begin{vmatrix} \cos(THxz(i)) & 0 & \sin(THxz(i)) \\ 0 & 1 & 0 \\ -\sin(THxz(i)) & 0 & \cos(THxz(i)) \end{vmatrix}$$

$$* \begin{vmatrix} 1 & 0 & 0 \\ 0 & \cos(THyz(i)) & \sin(THyz(i)) \\ 0 & -\sin(THyz(i)) & \cos(THyz(i)) \end{vmatrix} * \begin{vmatrix} X(i-1) \\ Y(i-1) \\ Z(i-1) \end{vmatrix}$$

Where THxy represents THETA in the xy plane; THxz, THETA in the xz plane; and THyz, THETA in the yz plane; and (X,Y,Z) represents individual pixels.

## Claims

1. An information processing system comprising:

a display (3);

means (5) coupled to the display for depicting an icon and a cursor thereon, the icon representing a plurality of actions and including a plurality of cursor positions therein, each position of the cursor within the icon representing first and second actions among the plurality of actions;

means (5) coupled to the display, and to the means for depicting and performing, for allowing a user to move the cursor to any one of the cursor positions within the icon; and

means (5) for performing the first and second actions represented by the position of the cursor within the icon.

2. An information processing system as claimed in claim 1 wherein the information being processed relates to an image.

3. An information processing system as claimed in any preceding claim wherein the icon is a dartboard (10), the radial position of the cursor within the dartboard represents the first action and the angular position of the cursor within the dartboard represents the second action.

4. An information processing system as claimed in claim 2 wherein the first action is a change in the scale of the image and the second action is a change in the rotation of the image.

5. An information processing system as claimed in claim 1 or claim 2 wherein the icon is a checkerboard (20), the horizontal position of the cursor within the checkerboard represents the first action and the vertical position of the cursor within the checkerboard represents the second action.

6. An information processing system as claimed in claim 2 wherein the first action is a change in the colour of the image and the second action is a change in the intensity of the image.

7. A method for performing actions in an information processing system, the information processing system including means (1) allowing a user to move a cursor to a plurality of positions on a display, the method comprising the steps of:

depicting (42) an icon and a cursor on the display, the icon including a plurality of cursor positions therein;

detecting (43) a single position of the cursor within the icon;

translating (53, 73) a first characteristic of the cursor position into a first action among the plurality of actions;

translating (55, 56, 73) a second characteristic of the cursor position into a second action among the plurality of actions; and

performing (58, 75) the first and second actions.

8. A method as claimed in claim 7 wherein the icon is a dartboard (10), the first characteristic of the cursor position is its radial position and the second characteristic of the cursor position is its angular position.

9. A method as claimed in claim 7 wherein the icon is a checkerboard (20), the first characteristic of the cursor position is its horizontal position and the second characteristic of the cursor position is its vertical position.

10. A method as claimed in claim 7 or claim 8 wherein the information processing system is an image processing system in which the first action is a change in the scale of the image and the second action is a change in the rotation of the image.

11. A method as claimed in claim 7 or claim 9 wherein the information processing system is an image processing system in which the first action is a change in the colour of the image and the second action is a change in the intensity of the image.

*FIG-1*

*FIG-2*

*FIG-3*

*FIG-7*

FIG.4

*Fig-5*

*Fig-6*

European Patent
Office

**EUROPEAN SEARCH REPORT**

Application Number

EP 92 30 8362

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 342 838 (IBM CORPORATION)<br><br>* abstract *<br>* page 6, line 35 - line 55; figures 5A-5F * | 1,2,6,7, 9 | G06F3/023<br>G06F3/033 |
| A | | 5 | |
| Y | IBM TECHNICAL DISCLOSURE BULLETIN vol. 33, no. 12, May 1991, ARMONK, NY, US pages 464 - 465 'Three-Dimensional Menu Icons to aid users in understanding hierarchy'<br>* page 464, line 1 - line 6 * | 1-3,6, 7-9 | |
| Y | APPLE COMPUTER, INC. 'Inside Macintosh - Volume V' September 1991 , ADDISON-WESLEY PUBLISHING COMPANY, INC. pages 172-174<br>* page 173, line 1 - line 13; figure 1 * | 3,8 | |
| A | EP-A-0 384 879 (SCITEX CORPORATION LTD .)<br>* column 1, line 29 - line 49 *<br>* column 5, line 20 - line 46; figure 1 * | 1,5,6 | TECHNICAL FIELDS SEARCHED (Int. Cl.5 )<br><br>G06F |

The present search report has been drawn up for all claims

| Place of search | Date of completion of the search | Examiner |
|---|---|---|
| THE HAGUE | 14 DECEMBER 1992 | BRAVO P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)